# EUROPEAN PATENT APPLICATION

(11) **EP 4 804 367 A1**
(43) Date of publication of application: **09.09.2026**
(21) Application number: 24905380.2
(22) Date of filing: 19.04.2024
(51) Int. Cl.: H02J 3/38, H02J 3/32

(54) **PHOTOVOLTAIC ENERGY STORAGE SYSTEM**

(30) Priority: 20.12.2023 CN 202311771998
(71) Applicant: Huawei Digital Power Technologies Co., Ltd., Shenzhen, Guangdong 518043 (CN)
(72) Inventor: SONG, Zhengang, Shenzhen, Guangdong 518129 (CN)
(74) Representative: Gill Jennings & Every LLP
(86) International application number: PCT/CN2024/088937
(87) International publication number: WO 2025/129875

(57) **Abstract**

This application provides a photovoltaic energy storage system, including an inverter and an energy storage apparatus. The inverter includes a direct current conversion circuit, a direct current bus, an inverter circuit, and a switching component. The switching component includes a first end, a second end, and a third end, the first end and the third end are configured to connect between a negative electrode of a photovoltaic module and a negative electrode of the direct current bus respectively, the second end is connected to a positive electrode of the direct current bus, and the switching component is configured to control disconnection between a negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus. The foregoing technical solution can reduce complexity of the photovoltaic energy storage system and a quantity of devices, and further lower costs.

## Description

This application claims priority to Chinese Patent Application No. 202311771998.0, filed with the China National Intellectual Property Administration on December 20, 2023 and entitled "PHOTOVOLTAIC ENERGY STORAGE SYSTEM", which is incorporated herein by reference in its entirety.

### TECHNICAL FIELD

This application relates to the field of power electronics technologies, and more specifically, to a photovoltaic energy storage system and a control method applied to the photovoltaic energy storage system.

### BACKGROUND

As countries around the world continuously advance energy conservation, emission reduction, and energy transformation, renewable energy power generation technologies have attracted increasing attention. Photovoltaic power generation systems are widely applied to power systems and micro grids due to their technology maturity and economy.

However, the photovoltaic power generation system has constantly been troubled by power generation efficiency of the photovoltaic power generation system. After a photovoltaic module is used for a period of time, a problem of power generation performance degradation occurs, and consequently, an output power of the entire photovoltaic power generation system decreases. It is found through research that the foregoing phenomenon occurs because a high voltage between a circuit in a crystalline silicon photovoltaic module and a grounded metal frame of the photovoltaic module causes continuous degradation of power generation performance of the photovoltaic module. This phenomenon is referred to as potential induced degradation (potential induced degradation, PID).

To resolve a PID problem of the photovoltaic module, a voltage compensation module is usually disposed in the photovoltaic power generation system. For example, for a photovoltaic energy storage inverter in a photovoltaic energy storage system, when the photovoltaic module has no energy output at night, an energy storage system still provides energy for the photovoltaic energy storage inverter, so that the photovoltaic energy storage inverter continuously runs in a grid-connected mode. In this case, a negative electrode (PV-) of the photovoltaic module continuously maintains a negative voltage relative to the ground (PE). A switch apparatus, such as a relay, needs to be disposed to disconnect the negative electrode (PV-) of the photovoltaic module from a negative output end (BUS-) of the photovoltaic energy storage inverter, and then boost the voltage of the negative electrode (PV-) of the photovoltaic module relative to the ground (PE) to a positive voltage via the voltage compensation module.

Therefore, in a current PID compensation technical solution, for the photovoltaic energy storage system, an independent voltage compensation module is needed, or the voltage compensation module is integrated into an AC auxiliary power supply, to perform PID compensation on the photovoltaic module. However, this increases complexity of the photovoltaic power generation system and a quantity of devices, and further greatly increases costs.

Based on this, how to reduce complexity of the photovoltaic energy storage system and a quantity of devices, and further lower costs becomes an urgent problem to be resolved currently.

### SUMMARY

This application provides a photovoltaic energy storage system, so that PID compensation can be performed on a photovoltaic module at night without disposing an additional voltage compensation module in the photovoltaic energy storage system, to reduce complexity of the photovoltaic energy storage system and a quantity of devices, and further lower costs.

According to a first aspect, a photovoltaic energy storage system is provided, including: an inverter and an energy storage apparatus. The inverter includes a direct current conversion circuit, a direct current bus, an inverter circuit, and a switching component. A positive input end of the direct current conversion circuit is configured to connect to a positive electrode of a photovoltaic module, and a negative input end of the direct current conversion circuit is configured to connect to a negative electrode of the photovoltaic module. A positive output end of the direct current conversion circuit is connected to a positive electrode of the direct current bus, a negative output end of the direct current conversion circuit is connected to a negative electrode of the direct current bus, the positive electrode of the direct current bus is connected to a positive input end of the inverter circuit and a positive electrode of the energy storage apparatus, and the negative electrode of the direct current bus is connected to a negative input end of the inverter circuit and a negative electrode of the energy storage apparatus. The switching component includes a first end, a second end, and a third end, the first end and the third end are configured to connect between the negative electrode of the photovoltaic module and the negative electrode of the direct current bus respectively, the first end and the third end are configured to control connection/disconnection between the negative electrode of the photovoltaic module and the negative electrode of the direct current bus, the second end is connected to the positive electrode of the direct current bus, and the switching component is configured to control disconnection between the negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus.

According to the foregoing technical solution, the switching component is disposed in the photovoltaic energy storage system, the first end and the third end of the switching component are configured to connect between the negative electrode of the photovoltaic module and the negative electrode of the direct current bus respectively, and the second end of the switching component is connected to the positive electrode of the direct current bus. The switching component is configured to control disconnection between the negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus. At night, the energy storage apparatus provides energy for the inverter. When a controller controls the first end to be connected to the second end of the photovoltaic module, a voltage output by the energy storage apparatus can be input to the negative electrode of the photovoltaic module, so that a voltage of the negative electrode of the photovoltaic module relative to the ground is boosted to a zero voltage or a positive voltage, to perform PID compensation on the photovoltaic module at night. In addition, in this embodiment of this application, an additional voltage compensation module does not need to be disposed in the photovoltaic energy storage system, so that complexity of the photovoltaic energy storage system and a quantity of devices can be reduced, and costs can be further lowered.

With reference to the first aspect, in some implementations of the first aspect, that the first end and the third end are configured to connect between the negative electrode of the photovoltaic module and the negative electrode of the direct current bus respectively includes: the first end is configured to connect to the negative electrode of the photovoltaic module, and the third end is connected to the negative input end of the direct current conversion circuit; or the first end is connected to the negative input end of the direct current conversion circuit, and the third end is connected to the negative output end of the direct current conversion circuit; or the first end is connected to the negative output end of the direct current conversion circuit, and the third end is connected to the negative electrode of the direct current bus. According to the foregoing technical solution, the complexity of the photovoltaic energy storage system and the quantity of devices can be reduced, and the costs can be further lowered.

With reference to the first aspect, in some implementations of the first aspect, the photovoltaic energy storage system further includes a controller, and the controller is configured to: when an output voltage and/or an output current of the photovoltaic module are/is less than or equal to thresholds/a threshold, control the first end to be connected to the second end, and control the first end to be disconnected from the third end, where a positive voltage output by the energy storage apparatus is used to boost a voltage of the negative electrode of the photovoltaic module relative to the ground to a zero voltage or a positive voltage.

According to the foregoing technical solution, when the output voltage and/or the output current of the photovoltaic module are/is less than or equal to the thresholds/threshold, the controller controls the first end to be connected to the second end of the switching component. The second end of the switching component is connected to the positive electrode of the direct current bus, and the controller controls the first end to be connected to the second end of the switching component. Therefore, the voltage output by the energy storage apparatus can be input to the negative electrode of the photovoltaic module, so that the voltage value of the negative electrode (PV-) of the photovoltaic module relative to the ground is boosted to the zero voltage or the positive voltage, and the photovoltaic energy storage system performs PID compensation on the photovoltaic module at night. In addition, in this embodiment of this application, the additional voltage compensation module does not need to be disposed in the photovoltaic energy storage system, so that the complexity of the photovoltaic energy storage system and the quantity of devices can be reduced, and the costs can be further lowered.

With reference to the first aspect, in some implementations of the first aspect, the controller is further configured to: when the output voltage and/or the output current of the photovoltaic module are/is greater than the threshold, control the first end to be disconnected from the second end, and control the first end to be connected to the third end, where a direct current output by the photovoltaic module is used to supply power to the inverter circuit and the energy storage apparatus. According to the foregoing technical solution, the complexity of the photovoltaic energy storage system and the quantity of devices can be reduced, and the costs can be further lowered.

With reference to the first aspect, in some implementations of the first aspect, the photovoltaic energy storage system further includes a current-limiting device, where one end of the current-limiting device is connected to the positive electrode of the direct current bus, and the other end of the current-limiting device is connected to the second end. According to the foregoing technical solution, the complexity of the photovoltaic energy storage system and the quantity of devices can be reduced, and the costs can be further lowered.

With reference to the first aspect, in some implementations of the first aspect, the controller is further configured to: when a voltage of the direct current bus is less than or equal to a first preset value, control a waveform generation mode of a switching transistor in the direct current conversion circuit to be an open-loop waveform generation mode, where when the switching transistor is in the open-loop waveform generation mode, a voltage at the first end and the third end is reduced.

According to the foregoing technical solution, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the first end and the third end of the switching component S1 can be safely connected before the photovoltaic energy storage system is powered off and shut down. In this way, contact damage, increased contact resistance, and failure of the switching component are avoided, and reliability of an entire device is improved.

With reference to the first aspect, in some implementations of the first aspect, the controller is further configured to: when a voltage value at the first end and the third end is less than or equal to a second preset value, control the first end to be disconnected from the second end, and control the first end to be connected to the third end, where the second preset value is a safe-disconnection voltage value at the first end and the second end.

According to the foregoing technical solution, when the energy storage apparatus in the photovoltaic energy storage system is powered off and shut down (for example, the battery SOC in the energy storage apparatus reaches the lower limit for shutdown, the energy storage apparatus is faulty, the battery level reaches the lower limit, or the energy storage switch is manually turned off), the first end and the third end of the switching component S1 can be safely connected before the photovoltaic energy storage system is powered off and shut down. In this way, contact damage, increased contact resistance, and failure of the switching component are avoided, and reliability of the entire device is improved.

With reference to the first aspect, in some implementations of the first aspect, the controller is further configured to: when duration for which the switching transistor is in the open-loop waveform generation mode is longer than or equal to preset duration, control the first end to be disconnected from the second end, and control the first end to be connected to the third end.

According to the foregoing technical solution, when the energy storage apparatus in the photovoltaic energy storage system is powered off and shut down (for example, the battery SOC in the energy storage apparatus reaches the lower limit for shutdown, the energy storage apparatus is faulty, the battery level reaches the lower limit, or the energy storage switch is manually turned off), the first end and the third end of the switching component S1 can be safely connected before the photovoltaic energy storage system is powered off and shut down. In this way, contact damage, increased contact resistance, and failure of the switching component are avoided, and reliability of the entire device is improved.

With reference to the first aspect, in some implementations of the first aspect, the current-limiting device includes at least one of the following: a resistor, an inductor, and a capacitor. According to the foregoing technical solution, the complexity of the photovoltaic energy storage system and the quantity of devices can be reduced, and the costs can be further lowered.

With reference to the first aspect, in some implementations of the first aspect, the photovoltaic energy storage system further includes a first diode, and the first diode is connected in parallel to the first end and the third end, where a direction of a forward current of the first diode is opposite to a direction of a current flowing through the first end and the third end when the first end is connected to the third end. According to the foregoing technical solution, the first diode is disposed in anti-parallel to the first end and the third end of the switching component, so that impact of overvoltage in a circuit can be eliminated.

With reference to the first aspect, in some implementations of the first aspect, the switching component includes any one of the following: a relay, a metal oxide semiconductor field effect transistor MOSFIT, and an insulated gate bipolar transistor IGBT.

According to a second aspect, an inverter is provided, including: a direct current conversion circuit, a direct current bus, an inverter circuit, and a switching component. A positive input end of the direct current conversion circuit is configured to connect to a positive electrode of a photovoltaic module, and a negative input end of the direct current conversion circuit is configured to connect to a negative electrode of the photovoltaic module. A positive output end of the direct current conversion circuit is connected to a positive electrode of the direct current bus, a negative output end of the direct current conversion circuit is connected to a negative electrode of the direct current bus, the positive electrode of the direct current bus is connected to a positive input end of the inverter circuit, the negative electrode of the direct current bus is connected to a negative input end of the inverter circuit, the positive electrode of the direct current bus is configured to connect to a positive electrode of an energy storage apparatus, and the negative electrode of the direct current bus is configured to connect to a negative electrode of the energy storage apparatus. The switching component includes a first end, a second end, and a third end, the first end and the third end are configured to connect between the negative electrode of the photovoltaic module and the negative electrode of the direct current bus respectively, the first end and the third end are configured to control connection/disconnection between the negative electrode of the photovoltaic module and the negative electrode of the direct current bus, the second end is connected to the positive electrode of the direct current bus, and the switching component is configured to control disconnection between the negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus.

According to the foregoing technical solution, the switching component is disposed in the inverter, the first end and the third end of the switching component are configured to connect between the negative electrode of the photovoltaic module and the negative electrode of the direct current bus respectively, and the second end of the switching component is connected to the positive electrode of the direct current bus. The switching component is configured to control disconnection between the negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus. At night, the energy storage apparatus provides energy for the inverter. When a controller controls the first end to be connected to the second end of the photovoltaic module, a voltage output by the energy storage apparatus can be input to the negative electrode of the photovoltaic module, so that a voltage of the negative electrode of the photovoltaic module relative to the ground is boosted to a zero voltage or a positive voltage, to perform PID compensation on the photovoltaic module at night. In addition, in this embodiment of this application, an additional voltage compensation module does not need to be disposed in a photovoltaic energy storage system, so that complexity of the photovoltaic energy storage system and a quantity of devices can be reduced, and costs can be further lowered.

With reference to the second aspect, in some implementations of the second aspect, that the first end and the third end are configured to connect between the negative electrode of the photovoltaic module and the negative electrode of the direct current bus respectively includes: the first end is configured to connect to the negative electrode of the photovoltaic module, and the third end is connected to the negative input end of the direct current conversion circuit; or the first end is connected to the negative input end of the direct current conversion circuit, and the third end is connected to the negative output end of the direct current conversion circuit; or the first end is connected to the negative output end of the direct current conversion circuit, and the third end is connected to the negative electrode of the direct current bus. According to the foregoing technical solution, the complexity of the photovoltaic energy storage system and the quantity of devices can be reduced, and the costs can be further lowered.

With reference to the second aspect, in some implementations of the second aspect, the inverter further includes a controller, and the controller is configured to: when an output voltage and/or an output current of the photovoltaic module are/is less than or equal to thresholds/a threshold, control the first end to be connected to the second end, and control the first end to be disconnected from the third end, where a positive voltage output by the energy storage apparatus is used to boost a voltage of the negative electrode of the photovoltaic module relative to the ground to a zero voltage or a positive voltage.

According to the foregoing technical solution, when the output voltage and/or the output current of the photovoltaic module are/is less than or equal to the thresholds/threshold, the controller controls the first end to be connected to the second end of the switching component. The second end of the switching component is connected to the positive electrode of the direct current bus, and the controller controls the first end to be connected to the second end of the switching component. Therefore, the voltage output by the energy storage apparatus can be input to the negative electrode of the photovoltaic module, so that the voltage value of the negative electrode (PV-) of the photovoltaic module relative to the ground is boosted to the zero voltage or the positive voltage, and the photovoltaic energy storage system performs PID compensation on the photovoltaic module at night. In addition, in this embodiment of this application, the additional voltage compensation module does not need to be disposed in the photovoltaic energy storage system, so that the complexity of the photovoltaic energy storage system and the quantity of devices can be reduced, and the costs can be further lowered.

With reference to the second aspect, in some implementations of the second aspect, the controller is further configured to: when the output voltage and/or the output current of the photovoltaic module are/is greater than the threshold, control the first end to be disconnected from the second end, and control the first end to be connected to the third end, where a direct current output by the photovoltaic module is used to supply power to the inverter circuit and the energy storage apparatus. According to the foregoing technical solution, the complexity of the photovoltaic energy storage system and the quantity of devices can be reduced, and the costs can be further lowered.

With reference to the second aspect, in some implementations of the second aspect, the inverter further includes a current-limiting device, where one end of the current-limiting device is connected to the positive electrode of the direct current bus, and the other end of the current-limiting device is connected to the second end. According to the foregoing technical solution, the complexity of the photovoltaic energy storage system and the quantity of devices can be reduced, and the costs can be further lowered.

With reference to the second aspect, in some implementations of the second aspect, the controller is further configured to: when a voltage of the direct current bus is less than or equal to a first preset value, control a waveform generation mode of a switching transistor in the direct current conversion circuit to be an open-loop waveform generation mode, where when the switching transistor is in the open-loop waveform generation mode, a voltage at the first end and the third end is reduced.

According to the foregoing technical solution, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the first end and the third end of the switching component can be safely connected before the photovoltaic energy storage system is powered off and shut down. In this way, contact damage, increased contact resistance, and failure of the switching component are avoided, and reliability of an entire device is improved.

With reference to the second aspect, in some implementations of the second aspect, the controller is further configured to: when a voltage value at the first end and the third end is less than or equal to a second preset value, control the first end to be disconnected from the second end, and control the first end to be connected to the third end, where the second preset value is a safe-disconnection voltage value at the first end and the second end.

According to the foregoing technical solution, when the energy storage apparatus in the photovoltaic energy storage system is powered off and shut down (for example, the battery SOC in the energy storage apparatus reaches the lower limit for shutdown, the energy storage apparatus is faulty, the battery level reaches the lower limit, or the energy storage switch is manually turned off), the first end and the third end of the switching component can be safely connected before the photovoltaic energy storage system is powered off and shut down. In this way, contact damage, increased contact resistance, and failure of the switching component are avoided, and reliability of the entire device is improved.

With reference to the second aspect, in some implementations of the second aspect, the controller is further configured to: when duration for which the switching transistor is in the open-loop waveform generation mode is longer than or equal to preset duration, control the first end to be disconnected from the second end, and control the first end to be connected to the third end.

According to the foregoing technical solution, when the energy storage apparatus in the photovoltaic energy storage system is powered off and shut down (for example, the battery SOC in the energy storage apparatus reaches the lower limit for shutdown, the energy storage apparatus is faulty, the battery level reaches the lower limit, or the energy storage switch is manually turned off), the first end and the third end of the switching component can be safely connected before the photovoltaic energy storage system is powered off and shut down. In this way, contact damage, increased contact resistance, and failure of the switching component are avoided, and reliability of the entire device is improved.

With reference to the second aspect, in some implementations of the second aspect, the current-limiting device includes at least one of the following: a resistor, an inductor, and a capacitor. According to the foregoing technical solution, the complexity of the photovoltaic energy storage system and the quantity of devices can be reduced, and the costs can be further lowered.

With reference to the second aspect, in some implementations of the second aspect, the inverter further includes a first diode, and the first diode is connected in parallel to the first end and the third end, where a direction of a forward current of the first diode is opposite to a direction of a current flowing through the first end and the third end when the first end is connected to the third end. According to the foregoing technical solution, the first diode is disposed in anti-parallel to the first end and the third end of the switching component, so that impact of overvoltage in a circuit can be eliminated.

According to a third aspect, a control method is provided. The method includes: obtaining an output voltage and/or an output current of a photovoltaic module; and when the output voltage and/or the output current of the photovoltaic module are/is less than or equal to thresholds/a threshold, controlling a first end to be connected to a second end of a switching component, and controlling the first end to be disconnected from a third end, so that a positive voltage output by an energy storage apparatus is used to boost a voltage of a negative electrode of the photovoltaic module relative to the ground to a zero voltage or a positive voltage; or when the output voltage and/or the output current of the photovoltaic module are/is less than or equal to the thresholds/threshold, controlling the first end to be disconnected from the second end, and controlling the first end to be connected to the third end of the switching component, so that a direct current output by the photovoltaic module is used to supply power to an inverter circuit and the energy storage apparatus. A positive electrode of the energy storage apparatus and a positive input end of the inverter circuit are connected to a positive electrode of a direct current bus, and a negative electrode of the energy storage apparatus and a negative input end of the inverter circuit are connected to a negative electrode of the direct current bus. The first end and the third end are configured to connect between the negative electrode of the photovoltaic module and the negative electrode of the direct current bus respectively, the first end and the third end are configured to control connection/disconnection between the negative electrode of the photovoltaic module and the negative electrode of the direct current bus, the second end is connected to the positive electrode of the direct current bus, and the switching component is configured to control disconnection between a negative input end of a direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus.

According to the foregoing technical solution, when the output voltage and/or the output current of the photovoltaic module are/is less than or equal to the thresholds/threshold, the controller controls the first end to be connected to the second end of the switching component. The second end of the switching component is connected to the positive electrode of the direct current bus, and a controller controls the first end to be connected to the second end of the switching component. Therefore, the positive voltage output by the energy storage apparatus can be input to the negative electrode of the photovoltaic module, so that the voltage value of the negative electrode (PV-) of the photovoltaic module relative to the ground is boosted to the zero voltage or the positive voltage, and the photovoltaic energy storage system performs PID compensation on the photovoltaic module at night. In addition, in this embodiment of this application, an additional voltage compensation module does not need to be disposed in the photovoltaic energy storage system, so that complexity of the photovoltaic energy storage system and a quantity of devices can be reduced, and costs can be further lowered.

With reference to the third aspect, in some implementations of the third aspect, the method further includes: obtaining a voltage of the direct current bus; and when the voltage of the direct current bus is less than a first preset value, controlling a waveform generation mode of a switching transistor in the direct current conversion circuit to be an open-loop waveform generation mode, where when the switching transistor is in the open-loop waveform generation mode, a voltage at the first end and the third end is reduced.

According to the foregoing technical solution, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the first end and the third end of the switching component S1 can be safely connected before the photovoltaic energy storage system is powered off and shut down. In this way, contact damage, increased contact resistance, and failure of the switching component are avoided, and reliability of an entire device is improved.

With reference to the third aspect, in some implementations of the third aspect, the method further includes: obtaining a voltage value at the first end and the third end; and when the voltage value at the first end and the third end is less than or equal to a second preset value, controlling the first end to be connected to the third end, and controlling the first end to be disconnected from the second end of the switching component, where the second preset value is a safe-disconnection voltage value at the first end and the second end.

According to the foregoing technical solution, when the energy storage apparatus in the photovoltaic energy storage system is powered off and shut down (for example, the battery SOC in the energy storage apparatus reaches the lower limit for shutdown, the energy storage apparatus is faulty, the battery level reaches the lower limit, or the energy storage switch is manually turned off), the first end and the third end of the switching component S1 can be safely connected before the photovoltaic energy storage system is powered off and shut down. In this way, contact damage, increased contact resistance, and failure of the switching component are avoided, and reliability of the entire device is improved.

With reference to the third aspect, in some implementations of the third aspect, the method further includes: when duration for which the switching transistor is in the open-loop waveform generation mode is longer than or equal to preset duration, controlling the first end to be connected to the third end, and controlling the first end to be disconnected from the second end.

According to the foregoing technical solution, when the energy storage apparatus in the photovoltaic energy storage system is shut down at a lower limit (for example, the battery SOC in the energy storage apparatus reaches the lower limit for shutdown, the energy storage apparatus is faulty, the battery level reaches the lower limit, or the energy storage switch is manually turned off), the first end and the third end of the switching component S1 can be safely connected before the photovoltaic energy storage system is shut down at the lower limit. In this way, contact damage, increased contact resistance, and failure of the switching component are avoided, and reliability of the entire device is improved.

With reference to the third aspect, in some implementations of the third aspect, the switching component includes any one of the following: a relay, a metal oxide semiconductor field effect transistor MOSFIT, and an insulated gate bipolar transistor IGBT.

### BRIEF DESCRIPTION OF DRAWINGS

FIG. 1 is a diagram of an application scenario of a photovoltaic energy storage system according to an embodiment of this application;
FIG. 2 is a diagram of a structure of a photovoltaic energy storage system 100 according to another embodiment of this application;
FIG. 3A and FIG. 3B are diagrams of a structure of a photovoltaic energy storage system 100 according to another embodiment of this application;
FIG. 4 is a diagram of a structure of a photovoltaic energy storage system 100 according to another embodiment of this application;
FIG. 5A and FIG. 5B are diagrams of a structure of a photovoltaic energy storage system 100 according to another embodiment of this application;
FIG. 6 is a schematic of a structure of a direct current conversion circuit 121 according to an embodiment of this application;
FIG. 7A and FIG. 7B are diagrams of a current path of a direct current conversion circuit 121 in which a switching transistor Q1 is in an open-loop waveform generation mode according to an embodiment of this application;
FIG. 8 is a diagram in which a voltage value at a first end and a third end in a switching component S1 vary with time when a switching transistor Q1 is in an open-loop waveform generation mode;
FIG. 9 is a schematic flowchart of a control method 900 according to an embodiment of this application;
FIG. 10 is a schematic flowchart of a control method 900 according to another embodiment of this application; and
FIG. 11 is a schematic flowchart of a control method 900 according to another embodiment of this application.

### DESCRIPTION OF EMBODIMENTS

The following describes technical solutions of this application with reference to the accompanying drawings.

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefix words such as ordinal numbers used to distinguish between the described objects in embodiments of this application does not constitute a limitation on the described objects. For descriptions of the described objects, refer to the context description in claims or embodiments, and the use of such prefix words should not constitute a redundant limitation. In addition, in the descriptions of embodiments, unless otherwise specified, "a plurality of" means two or more.

Reference to "in some embodiments" or the like described in this specification means that one or more embodiments of this application include a particular feature, structure, or characteristic described with reference to embodiments. Therefore, statements such as "in some embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

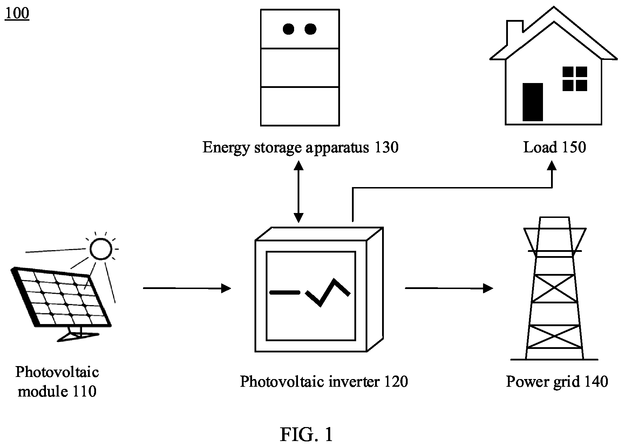

With reference to FIG. 1, the following first describes in detail an application scenario of a photovoltaic energy storage system provided in an embodiment of this application.

FIG. 1 is a diagram of an application scenario of a photovoltaic energy storage system according to an embodiment of this application. As shown in FIG. 1, apparatuses in the application scenario of the photovoltaic energy storage system 110 include a photovoltaic module 110, a photovoltaic inverter 120, and an energy storage apparatus 130. Optionally, the photovoltaic energy storage system 110 may further include a power grid 140 and a load 150.

Specifically, the photovoltaic module 110 may also be referred to as a photovoltaic array, including a plurality of photovoltaic strings. Photovoltaic is also referred to as photovoltaic, or referred to as PV for short. A string is also referred to as a string. Each photovoltaic string includes a plurality of photovoltaic panels connected in series. The photovoltaic panel is configured to convert light energy into electric energy. The electric energy generated by the photovoltaic panel is a direct current. A voltage at two ends of the photovoltaic string is equal to a sum of voltages generated by the plurality of photovoltaic panels. An output power of the photovoltaic module 110 may represent electric energy output by the photovoltaic module per unit time.

The photovoltaic inverter 120 can convert a direct current from the photovoltaic module 110 into an alternating current, and transfer the alternating current to the power grid 140 or the load 150. Alternatively, the photovoltaic inverter 120 can transfer a direct current from the photovoltaic module 110 to the energy storage apparatus 130, to charge the energy storage apparatus 130. It should be noted that the direct current is also referred to as a direct current, or referred to as a DC for short. The alternating current is also referred to as an alternating current, or referred to as an AC for short. The photovoltaic inverter 120 may also be referred to as a DC-AC converter or an inverter circuit (DC-AC).

Optionally, the photovoltaic inverter 120 may further include a voltage regulator module (not shown in the figure), and the voltage regulator module may implement a voltage regulator function for a voltage output by a power generation module. For example, the voltage regulator module may be a direct current-to-direct current converter, or may be referred to as a DC-DC converter, or may be referred to as a direct current conversion circuit (DC-DC). In an example, the direct current conversion circuit (DC-DC) may be disposed in a maximum power point tracking (maximum power point tracking, MPPT) module in the photovoltaic inverter. It should be noted that the direct current conversion circuit (DC-DC) is usually disposed before an inverter circuit (DC-AC) in the photovoltaic inverter 120, and is configured to regulate a direct current output by the photovoltaic module 110 and then output the direct current to the inverter circuit.

Still refer to FIG. 1. The energy storage apparatus 130 in the photovoltaic energy storage system 110 can store and release electric energy. For example, the energy storage apparatus 130 may store direct current energy from the photovoltaic module 110, and the energy storage apparatus 130 may also supply power to the power grid 140 or the load 150 via the photovoltaic inverter 120. Therefore, the energy storage apparatus 130 is widely used in scenarios including but not limited to a household scenario, an industry green electricity scenario, a smart photovoltaic power station scenario, and the like.

It may be learned from the foregoing descriptions that the photovoltaic inverter 120 is a converter that can convert a direct current into an alternating current. Specifically, the photovoltaic inverter 120 may include two direct current ports (for example, a direct current port 1 and a direct current port 2) and an alternating current port. The two direct current ports are configured to connect to the photovoltaic module 110 and the energy storage apparatus 130 respectively. For example, the direct current port 1 is configured to connect to the photovoltaic module 110, and the direct current port 2 is configured to connect to the energy storage apparatus 130. The alternating current port may be configured to output an alternating current, and the output alternating current may be distributed, for example, to the power grid 140 and the load 150, via a power distribution box (not shown in the figure).

The photovoltaic module 110 may feed the power grid 140 and supply power to the load 150 through a direct current port. The energy storage apparatus 130 may supply power to the load 150 through a direct current port. The power grid 140 may supply power to the load 150 through an alternating current port. In other words, the photovoltaic inverter 130 is a connection hub between the load 150 and an energy module (which may include the photovoltaic module 110, the energy storage apparatus 130, and the power grid 140).

Currently, in actual application of the photovoltaic energy storage system, during grid-connected power generation in the daytime, a high voltage between a circuit in a photovoltaic module and a grounded metal frame of the photovoltaic module causes continuous degradation of power generation performance of the photovoltaic module. This phenomenon is referred to as potential induced degradation (potential induced degradation, PID).

To resolve a PID problem of the photovoltaic module, a voltage compensation module is usually disposed in a photovoltaic power generation system. For example, for a photovoltaic energy storage inverter in the photovoltaic energy storage system, when the photovoltaic module has no energy output at night, an energy storage system still provides energy for the photovoltaic energy storage inverter, so that the photovoltaic energy storage inverter continuously runs in a grid-connected mode. In this case, a negative electrode (PV-) of the photovoltaic module continuously maintains a negative voltage relative to the ground (PE). A switch apparatus, such as a relay, needs to be disposed to disconnect the negative electrode (PV-) of the photovoltaic module from a negative output end (BUS-) of the photovoltaic energy storage inverter, and then boost the voltage of the negative electrode (PV-) of the photovoltaic module relative to the ground (PE) to a positive voltage via the voltage compensation module.

Therefore, in a current PID compensation technical solution, for the photovoltaic energy storage system, an independent voltage compensation module is needed, or the voltage compensation module is integrated into an AC auxiliary power supply, to perform PID compensation on the photovoltaic module. However, this increases complexity of the photovoltaic power generation system and a quantity of devices, and further greatly increases costs.

Based on this, this application is intended to provide a photovoltaic energy storage system, so that PID compensation can be performed on a photovoltaic module at night without disposing an additional voltage compensation module in the photovoltaic energy storage system, to reduce complexity of the photovoltaic energy storage system and a quantity of devices, and further lower costs.

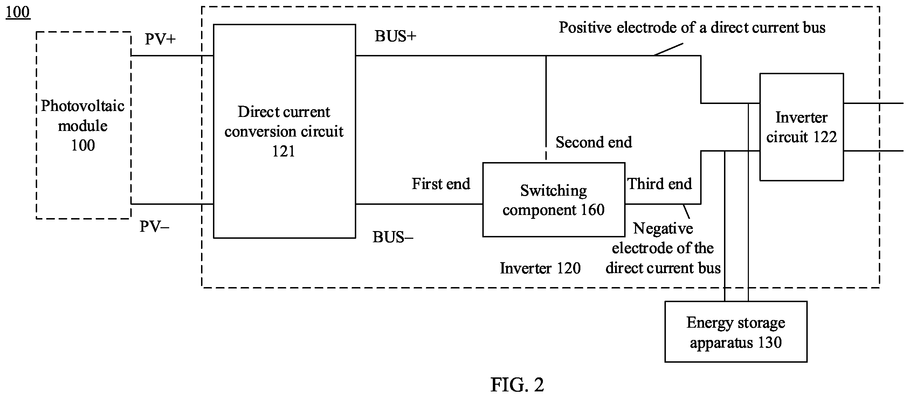

FIG. 2 is a diagram of a structure of a photovoltaic energy storage system 100 according to another embodiment of this application.

As shown in FIG. 2, the photovoltaic energy storage system 100 includes an inverter 120 and an energy storage apparatus 130. The inverter 120 includes a direct current conversion circuit 121, a direct current bus, an inverter circuit 122, and a switching component 160.

Specifically, a positive input end of the direct current conversion circuit 121 is configured to connect to a positive electrode of a photovoltaic module 110. A negative input end of the direct current conversion circuit 121 is configured to connect to a negative electrode of the photovoltaic module 110. The photovoltaic module 110 is configured to convert light energy into a direct current. It should be noted that the input ends (the positive input end and the negative input end) of the direct current conversion circuit 121 may be configured to connect to one or more photovoltaic modules 110. It should be understood that this is not limited in this embodiment of this application. In addition, for specific descriptions of the photovoltaic module 110, refer to the foregoing descriptions. Details are not described herein again.

A positive output end of the direct current conversion circuit 121 is connected to a positive electrode of the direct current bus. A negative output end of the direct current conversion circuit 121 is connected to a negative electrode of the direct current bus. The positive electrode of the direct current bus is connected to a positive input end of the inverter circuit 122 and a positive electrode of the energy storage apparatus 130. The negative electrode of the direct current bus is connected to a negative input end of the inverter circuit 122 and a negative electrode of the energy storage apparatus 130. The direct current conversion circuit 121 is configured to perform voltage conversion on an input direct current and then output the direct current. The inverter circuit 122 is configured to convert an input direct current into an alternating current for output.

Optionally, the direct current conversion circuit 121 may be a boost (boost) circuit. For example, the direct current conversion circuit 121 may be an MPPT circuit, or may be a circuit that can implement an MPPT function. It should be understood that this is not limited in this application.

It should be noted that the direct current conversion circuit 121 is equivalent to the voltage regulator module described above, and the inverter circuit 122 is equivalent to the DC-AC converter described above. For related descriptions of the direct current conversion circuit 121, the inverter circuit 122, and the energy storage apparatus 130, refer to the foregoing descriptions. Details are not described herein again. For ease of understanding, in the following embodiments, a direct current conversion circuit and an inverter circuit are used uniformly for description.

Optionally, the energy storage apparatus 130 may include a battery module. For example, the battery module may also be referred to as a battery pack.

Optionally, the energy storage apparatus 130 may further include a direct current-direct current DC-DC conversion circuit, and the DC-DC conversion circuit is electrically connected to the battery module.

Still refer to FIG. 2. In this embodiment of this application, the switching component 160 includes a first end, a second end, and a third end. The first end and the third end of the switching component 160 are configured to connect between the negative electrode of the photovoltaic module 110 and the negative electrode of the direct current bus respectively, and the first end and the third end of the switching component 160 are configured to control connection/disconnection between the negative electrode of the photovoltaic module 110 and the negative electrode of the direct current bus. The second end of the switching component 160 is connected to the positive electrode of the direct current bus.

Specifically, the switching component 160 is configured to control disconnection between the negative input end of the direct current conversion circuit 121 and the positive electrode of the direct current bus and connection between the negative input end of the direct current conversion circuit 121 and the negative electrode of the direct current bus, or the switching component 160 is configured to control connection between the negative input end of the direct current conversion circuit 121 and the positive electrode of the direct current bus and disconnection between the negative input end of the direct current conversion circuit 121 and the negative electrode of the direct current bus.

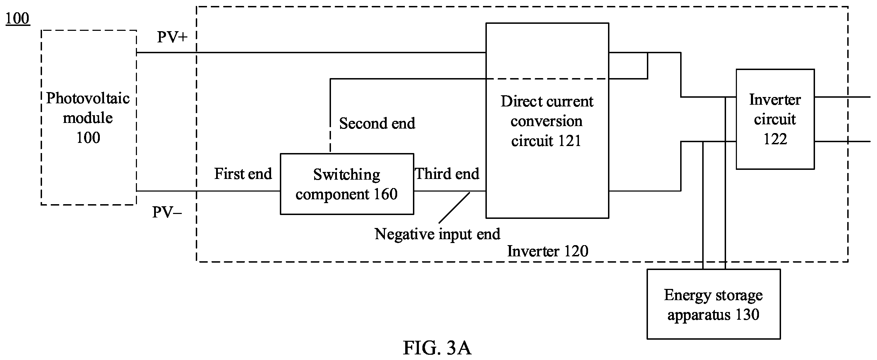

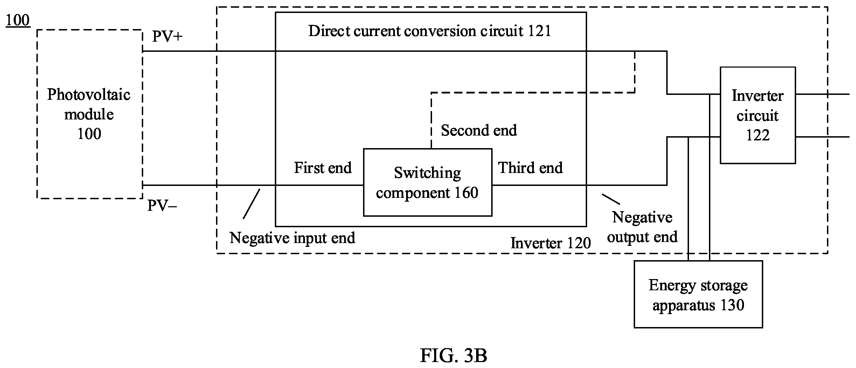

It should be noted that, that the first end and the third end of the switching component 160 are configured to connect between the negative electrode of the photovoltaic module 110 and the negative electrode of the direct current bus respectively may be understood as that the first end of the switching component 160 is directly or indirectly configured to connect to the negative electrode of the photovoltaic module 110, and the third end of the switching component 160 is directly or indirectly connected to the negative electrode of the direct current bus. For example, there are the following several possible examples of connection positions of the switching component in the photovoltaic energy storage system 100. FIG. 3A and FIG. 3B are diagrams of a structure of a photovoltaic energy storage system 100 according to another embodiment of this application.

For example, in a possible implementation, the first end of the switching component 160 is configured to connect to the negative electrode of the photovoltaic module 110, the second end of the switching component 160 is connected to the positive electrode of the direct current bus, and the third end of the switching component 160 is connected to the negative input end of the direct current conversion circuit 121, as shown in FIG. 3A.

For example, in a possible implementation, the first end of the switching component 160 is connected to the negative input end of the direct current conversion circuit 121, the second end of the switching component 160 is connected to the positive electrode of the direct current bus, and the third end of the switching component 160 is connected to the negative output end of the direct current conversion circuit 121. In other words, the switching component 160 is disposed between the negative input end and the negative output end of the direct current conversion circuit 121, as shown in FIG. 3B.

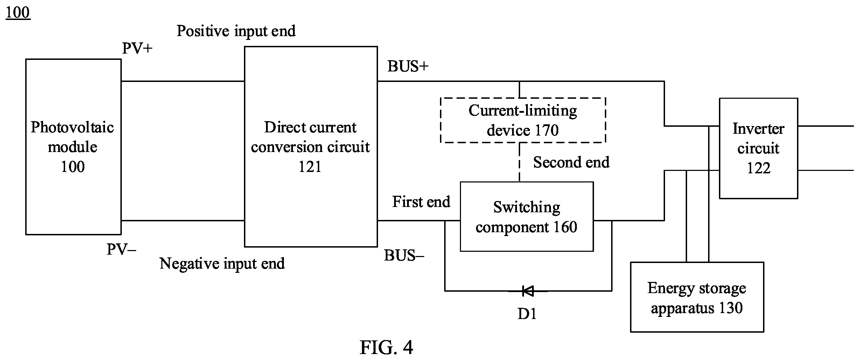

For example, in a possible implementation, the first end of the switching component 160 is connected to the negative output end of the direct current conversion circuit 121, the second end of the switching component 160 is connected to the positive electrode of the direct current bus, and the third end of the switching component 160 is connected to the negative electrode of the direct current bus, as shown in FIG. 4.

It should be further noted that, that the second end of the switching component 160 is connected to the positive electrode of the direct current bus may be understood as that the second end of the switching component 160 is directly or indirectly connected to the positive output end (BUS+) of the direct current conversion circuit 121.

It should be noted that the foregoing connection may be a direct connection, or may be an indirect connection via another device (for example, an inductor or a capacitor).

In addition, that the switching component 160 is configured to control disconnection between the negative input end of the direct current conversion circuit 121 and the positive electrode of the direct current bus and connection between the negative input end of the direct current conversion circuit 121 and the negative electrode of the direct current bus, or the switching component 160 is configured to control connection between the negative input end of the direct current conversion circuit 121 and the positive electrode of the direct current bus and disconnection between the negative input end of the direct current conversion circuit 121 and the negative electrode of the direct current bus may be understood as that even if there is another passive device (for example, an inductor or a capacitor) between the negative input end of the direct current conversion circuit 121 and the negative electrode of the direct current bus or between the direct current conversion circuit 121 and the positive electrode of the direct current bus, it does not affect a capability of the switching component 160 to control energy connection/disconnection between the energy storage apparatus 130 and the negative electrode of the photovoltaic module 110.

Optionally, FIG. 4 is a diagram of a structure of a photovoltaic energy storage system 100 according to another embodiment of this application. The photovoltaic energy storage system 100 may further include a current-limiting device 170. As shown in FIG. 4, one end of the current-limiting device 170 is connected to the positive electrode of the direct current bus, and the other end of the current-limiting device 170 is connected to the second end of the switching component 160. In other words, the second end of the switching component 160 may be indirectly connected to the positive electrode of the direct current bus via the current-limiting device 170.

For example, the current-limiting device 170 may be a resistor, a capacitor, or an inductor. It should be understood that the current-limiting device 170 is disposed for safety regulation considerations. A type of the current-limiting device 170 is not limited herein in this embodiment of this application.

Further, in this embodiment of this application, the photovoltaic energy storage system 100 may further include a controller (not shown in the figure). Optionally, in a possible implementation, the controller is configured to: when an output voltage and/or an output current of the photovoltaic module 110 are/is less than or equal to thresholds/a threshold, control the first end to be connected to the second end of the photovoltaic module 110.

It should be noted that, that the output voltage and/or the output current of the photovoltaic module 110 are/is less than or equal to the thresholds/threshold may be understood as that at night, the photovoltaic module 110 does not convert light energy into a direct current, and therefore the current or the voltage output by the photovoltaic module 110 is less than or equal to the threshold. Specifically, for the photovoltaic energy storage system 100, at night, the energy storage apparatus 130 provides energy for the inverter circuit 122, and the inverter circuit 122 continuously runs in a grid-connected mode. When the controller controls the first end to be connected to the second end of the photovoltaic module 110, a voltage output by the energy storage apparatus can be input to the negative electrode of the photovoltaic module 110, so that a voltage of the negative electrode of the photovoltaic module 110 relative to the ground is boosted to a zero voltage or a positive voltage, and the photovoltaic energy storage system performs PID compensation on the photovoltaic module 110 at night.

For example, in a possible implementation, the controller is configured to: when the output voltage of the photovoltaic module 110 is less than or equal to the threshold, control the first end to be connected to the second end of the switching component 160, and control the first end to be disconnected from the third end of the switching component 160. It should be understood that the threshold in this case is a voltage threshold.

For example, in a possible implementation, the controller is configured to: when the output current of the photovoltaic module 110 is less than or equal to the threshold, control the first end to be connected to the second end of the switching component 160, and control the first end to be disconnected from the third end of the switching component 160. It should be understood that the threshold in this case is a current threshold.

For example, in a possible implementation, the controller is configured to: when both the output voltage and the output current of the photovoltaic module 110 are less than or equal to the thresholds, control the first end to be connected to the second end of the switching component 160, and control the first end to be disconnected from the third end of the switching component 160. It should be understood that the thresholds in this case are a current threshold and a voltage threshold respectively. In other words, that both the output voltage and the output current are less than or equal to the thresholds may be understood as that the output voltage is less than or equal to the voltage threshold, and the output current is also less than or equal to the current threshold.

Optionally, in a possible implementation, the controller is further configured to: when the output voltage and/or the output current of the photovoltaic module 110 are/is greater than the thresholds/threshold, control the first end to be disconnected from the second end of the switching component 160, and control the first end to be connected to the third end of the switching component 160.

That the output voltage and/or the output current of the photovoltaic module 110 are/is greater than the thresholds/threshold may be understood as that in the daytime, the photovoltaic module 110 converts light energy into a direct current for output, and in this case, the current or the voltage output by the photovoltaic module 110 is greater than the threshold. The controller controls the first end to be disconnected from the second end of the switching component 160, and controls the first end to be connected to the third end of the switching component 160, so that the photovoltaic module 110 can normally output the direct current in the daytime, to supply power to the inverter circuit 122 and the energy storage apparatus 130.

For example, in a possible implementation, the controller is configured to: when the output voltage of the photovoltaic module 110 is greater than the threshold, control the first end to be disconnected from the second end of the switching component 160, and control the first end to be connected to the third end of the switching component 160. It should be understood that the threshold in this case is the voltage threshold.

For example, in a possible implementation, the controller is configured to: when the output current of the photovoltaic module 110 is greater than the threshold, control the first end to be disconnected from the second end of the switching component 160, and control the first end to be connected to the third end of the switching component 160. It should be understood that the threshold in this case is the current threshold.

In a possible implementation, the controller is configured to: when both the output voltage and the output current of the photovoltaic module 110 are greater than the thresholds, control the first end to be disconnected from the second end of the switching component 160, and control the first end to be connected to the third end of the switching component 160. It should be understood that the thresholds in this case are the current threshold and the voltage threshold respectively. In other words, that both the output voltage and the output current are greater than the thresholds may be understood as that the output voltage is greater than the voltage threshold, and the output current is also greater than the current threshold.

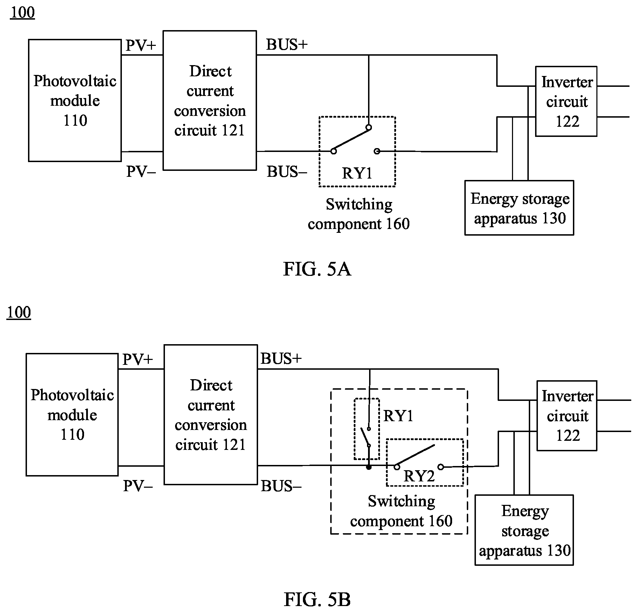

FIG. 5A and FIG. 5B are diagrams of a structure of a photovoltaic energy storage system 100 according to another embodiment of this application.

Optionally, in this embodiment of this application, the switching component 160 may be a single-pole double-throw switch, as shown in FIG. 5A.

Optionally, in this embodiment of this application, the switching component 160 may alternatively be a switching component 160 formed by two independent single-pole single-throw switches. As shown in FIG. 5B, fixed ends of a single-pole single-throw switch RY1 and a single-pole single-throw switch RY2 are connected in series to form the switching component 160.

It should be noted that the switching component 160 described above may be a relay, a metal oxide semiconductor field effect transistor (metal oxide semiconductor field effect transistor, MOSFIT), or an insulated gate bipolar transistor (insulated gate bipolar transistor, IGBT). It should be understood that this is not limited in this embodiment of this application.

Optionally, in a possible implementation, the photovoltaic energy storage system 100 further includes a first diode D1. As shown in FIG. 4, the first diode is connected in parallel to the first end and the third end of the switching component 160. A direction of a forward current of the first diode is opposite to a direction of a current flowing through the first end and the third end of the switching component when the first end is connected to the third end of the switching component.

Specifically, as shown in FIG. 4, that the direction of the forward current of the first diode D1 is opposite to the direction of the current flowing through the first end and the third end when the first end is connected to the third end of the switching component 160 may be understood as that the first diode D1 is connected in anti-parallel to the first end and the third end of the switching component 160.

It should be understood that a function of disposing the first diode D1 at the first end and the third end of the switching component is to eliminate impact of overvoltage. For example, when the photovoltaic module 110 outputs a voltage, a voltage difference between the first end and the third end of the switching component 160 is first eliminated by the first diode D1, and then the first end and the third end of the switching component 160 are connected.

It should be noted that a position of the switching component 160 shown in FIG. 4 is merely an example for description. Because the first diode D1 may be disposed in anti-parallel to the first end and the third end of the switching component 160, a position of the first diode D1 is not limited to the position shown in FIG. 4. It should be understood that this is not limited in this embodiment of this application.

In conclusion, according to the foregoing technical solution, when the output voltage and/or the output current of the photovoltaic module are/is less than or equal to the thresholds/threshold, the controller controls the first end to be connected to the second end of the switching component, and controls the first end to be disconnected from the third end of the switching component. The second end of the switching component is connected to the positive electrode of the direct current bus, and the controller controls the first end to be connected to the second end of the switching component. Therefore, the voltage output by the energy storage apparatus can be input to the negative electrode of the photovoltaic module, so that the voltage value of the negative electrode (PV-) of the photovoltaic module relative to the ground is boosted to the zero voltage or the positive voltage, and the photovoltaic energy storage system performs PID compensation on the photovoltaic module at night. In addition, in this embodiment of this application, an additional voltage compensation module does not need to be disposed in the photovoltaic energy storage system, so that complexity of the photovoltaic energy storage system and a quantity of devices can be reduced, and costs can be further lowered.

However, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the photovoltaic energy storage system is de-energized. To ensure that the photovoltaic energy storage system can work normally when the photovoltaic module has an output voltage or an output current in the daytime, the first end and the third end of the switching component need to be controlled to be connected before the energy storage apparatus is powered off and shut down.

However, because the inverter in the photovoltaic energy storage system continuously works in a grid-connected mode at night, the second end of the switching component is connected to the positive electrode of the direct current bus, and the voltage of the negative electrode (PV-) of the photovoltaic module relative to the ground (PE) can be boosted to the zero voltage or the positive voltage. As a result, a large voltage difference exists between the first end and the third end of the switching component. In this case, if the controller controls the first end to be connected to the third end, contact damage and increased contact resistance of the switching component may be caused, affecting reliability of an entire device, and even leading to failure of the switching component in severe cases.

To avoid the foregoing problem on the switching component, in this embodiment of this application, the controller is further configured to: when a voltage of the direct current bus is less than or equal to a first preset value, control a waveform generation mode of a switching transistor Q1 in the direct current conversion circuit 121 to be an open-loop waveform generation mode. The first preset value is a preset voltage value.

It should be understood that the voltage of the direct current bus may be considered as an input bus voltage of the inverter circuit 122 in the inverter, or an input bus voltage of an auxiliary power supply in the inverter 120. That the voltage of the direct current bus is less than or equal to the first preset value may be understood as that the energy storage apparatus 130 in the photovoltaic energy storage system 100 is shut down at a lower limit. In this case, the energy storage apparatus 130 does not provide energy for the inverter 120.

It should be noted that when the controller controls the switching transistor Q1 in the direct current conversion circuit 121 to be in the open-loop waveform generation mode, a voltage at the first end and the third end of the switching component 160 is reduced.

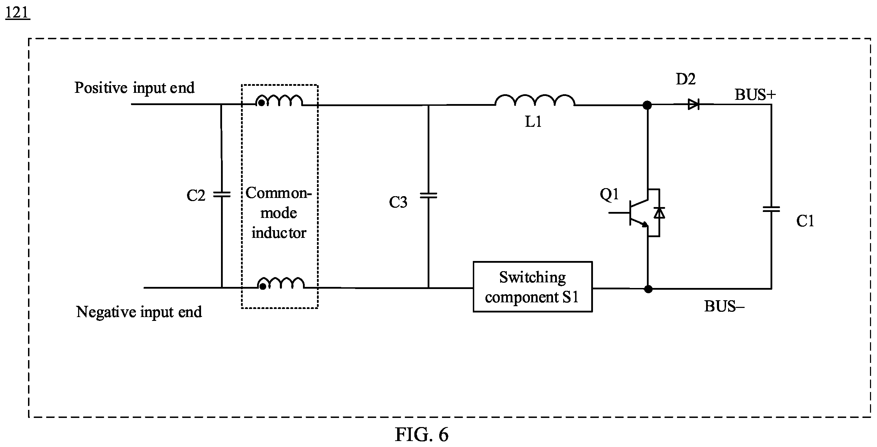

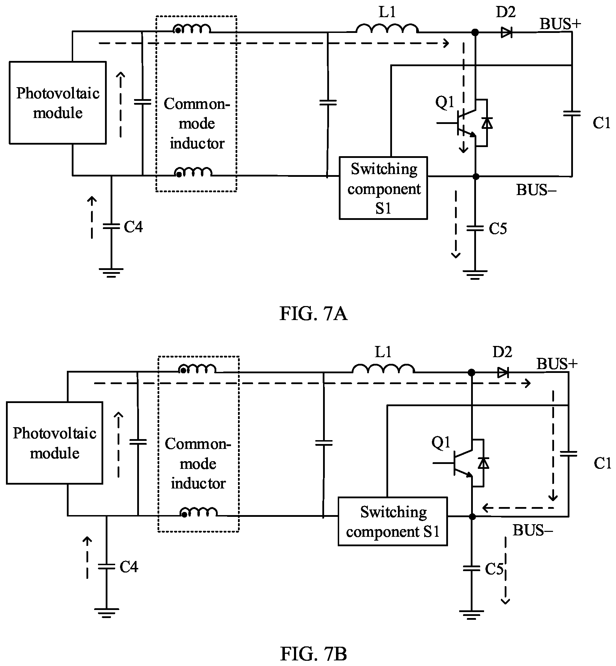

With reference to FIG. 6 and FIG. 7A and FIG. 7B, the following describes in detail a structure of the direct current conversion circuit 121 and a current path of the direct current conversion circuit in which the switching transistor is in the open-loop waveform generation mode. FIG. 6 is a schematic of a structure of a direct current conversion circuit 121 according to an embodiment of this application. FIG. 7A and FIG. 7B are diagrams of a current path of a direct current conversion circuit 121 in which a switching transistor Q1 is in an open-loop waveform generation mode according to an embodiment of this application.

As shown in FIG. 6, the direct current conversion circuit 121 includes: a positive input end, a negative input end, an inductor L1, a switching component S1, a second diode D2, a switching transistor Q1, a bus capacitor C1, a positive output end (BUS+), and a negative output end (BUS-). The positive input end and the negative input end are configured to connect to one or more photovoltaic modules (not shown in the figure). The positive output end (BUS+) and the negative output end (BUS-) are configured to connect to a direct current bus. One end of the bus capacitor C1 is connected to the positive output end (BUS+), and the other end of the bus capacitor C1 is connected to the negative output end (BUS-).

It should be understood that the switching component S1 is equivalent to the switching component 160 described above. For ease of understanding, the switching component S1 is used uniformly below for detailed description.

It should be noted that the switching transistor Q1 may be a metal oxide semiconductor field effect transistor (metal oxide semiconductor field effect transistor, MOSFIT), or an insulated gate bipolar transistor (insulated gate bipolar transistor, IGBT). It should be understood that this is not limited in this embodiment of this application.

Specifically, one end of the inductor L1 is connected to the positive input end, and the other end of the inductor L1 is connected to an anode of the second diode D2. The anode of the second diode D2 is further connected to a first end of the switching transistor Q1, and a cathode of the second diode D2 is connected to the positive output end (BUS+). A second end of the switching transistor Q1 is connected to the negative output end (BUS-), and the second end of the switching transistor Q1 is further connected to a third end of the switching component S1. A first end of the switching component S1 is connected to the negative input end.

Optionally, when the switching transistor Q1 is a MOS transistor, the first end is a drain, and the second end is a source. In other words, the anode of the second diode D2 is further connected to the drain of the switching transistor Q1, the source of the switching transistor Q1 is connected to the negative output end (BUS-), and the source of the switching transistor Q1 is further connected to the third end of the switching component S1.

Optionally, when the switching transistor Q1 is an IGBT, the first end is an emitter, and the second end is a collector. In other words, the anode of the second diode D2 is further connected to the emitter of the switching transistor Q1, the collector of the switching transistor Q1 is connected to the negative output end (BUS-), and the collector of the switching transistor Q1 is further connected to the third end of the switching component S1.

Optionally, the direct current conversion circuit 121 may further include a filter capacitor C2. One end of the filter capacitor C2 is connected to the positive input end, and the other end of the filter capacitor C2 is connected to the negative input end.

Optionally, the direct current conversion circuit 121 may further include a common-mode inductor. Input ports (the positive input end and the negative input end) of the direct current conversion circuit 121 are connected to input ports of the common-mode inductor. Output ports of the common-mode inductor are connected to output ports (the positive output end and the negative output end) of the direct current conversion circuit 121. The common-mode inductor is configured to filter common-mode noise in an alternating current.

Optionally, the direct current conversion circuit 121 may further include a filter capacitor C3. One end of the filter capacitor C3 is connected to the positive input end, and the other end of the filter capacitor C3 is connected to the negative input end.

It should be noted that the specific structure of the direct current conversion circuit 121 shown in FIG. 6 is merely an example for description. It should be understood that this is not limited in this embodiment of this application. For example, a position of the switching component S1 is not limited to the position shown in FIG. 6.

Further, when the controller controls the switching transistor Q1 to be in the open-loop waveform generation mode, a current path in the direct current conversion circuit 121 is shown in FIG. 7A and FIG. 7B.

Refer to FIG. 7A. When the switching transistor Q1 is turned on, a current flows from a Y capacitor C4 through a photovoltaic module (or an equivalent diode in the photovoltaic module), the inductor L1, the switching transistor Q1, and a Y capacitor C5, and finally flows to an enclosure to form a loop. In this case, energy on a Y capacitor C1 and the Y capacitor C5 is transferred to the inductor L1 through the current flow shown in FIG. 7A.

However, when the switching transistor Q1 is turned off, a current on the inductor L1 is freewheeled, a current path is shown in FIG. 7B, the second diode D2 is turned on, and the current flows through the bus capacitor C1.

In this way, as the switching transistor Q1 is continuously turned on and off in the open-loop waveform generation mode, energy on the Y capacitor C4 and the Y capacitor C5 can be released, so that a voltage at the first end and the third end of the switching component S1 is continuously reduced.

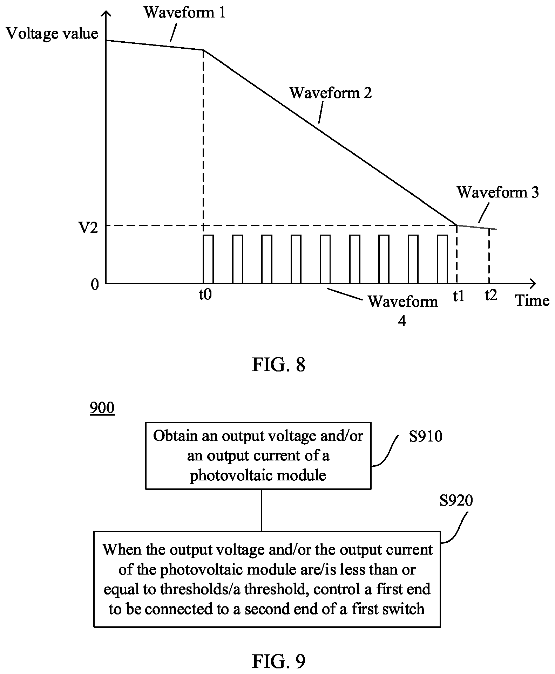

FIG. 8 is a diagram in which a voltage value at a first end and a third end in a switching component S1 vary with time when a switching transistor Q1 is in an open-loop waveform generation mode. First, it should be noted that a waveform shown in FIG. 8 specifically includes a voltage change waveform (for example, a waveform 1, a waveform 2, and a waveform 3) at the first end and the third end of the switching component S1 and a driving waveform (for example, a waveform 4) of the switching transistor Q1 in the open-loop waveform generation mode.

It can be learned from FIG. 8 that when the switching transistor Q1 is not in the open-loop waveform generation mode, that is, before a moment t0, in this case, the controller does not control the switching transistor Q1 to be in the open-loop waveform generation mode. It can be learned that a voltage at the first end and the second end of the switching component S1 is slowly reduced (the waveform 1). When the switching transistor Q1 is in the open-loop waveform generation mode, that is, after the moment t0, the controller controls the switching transistor Q1 to be in the open-loop waveform generation mode. It can be learned that in the open-loop waveform generation mode, a voltage at the first end and the third end of the switching component S1 is quickly reduced (the waveform 2) by continuously turning on and off the switching transistor Q1.

Optionally, in this embodiment of this application, the controller is further configured to: when a voltage value at the first end and the third end of the switching component S1 is less than or equal to a second preset value, control the first end to be connected to the third end of the switching component S1. The second preset value being a safe-disconnection voltage value at the first end and the third end of the switching component S1 may be understood as a critical voltage value at which the first end and the third end of the switching component S1 can be safely connected. In other words, when the voltage at the first end and the third end of the switching component S1 is less than or equal to the second preset value, problems such as contact damage, increased contact resistance, and failure of the switching component S1 do not occur when the first end is connected to the third end of the switching component S1.

It should be noted that the second preset value is a preset threshold.

For example, as shown in FIG. 8, an example in which the second preset value is a voltage value V2 is used for description.

Optionally, in a possible implementation, when the voltage value at the first end and the third end of the switching component S1 is less than or equal to the voltage value V2, the controller controls the first end to be connected to the third end of the switching component S1.

On the contrary, when the voltage value at the first end and the third end of the switching component S1 is greater than the voltage value V2, the controller controls the first end and the third end of the switching component S1 to remain disconnected until a detection apparatus detects that the voltage value at the first end and the third end of the switching component S1 is less than or equal to the voltage value V2, and then the controller controls the first end to be connected to the third end of the switching component S1.

Optionally, in a possible implementation, the controller is further configured to: when duration for which the switching transistor is in the open-loop waveform generation mode is longer than or equal to preset duration, control the first end to be connected to the third end of the switching component S1.

It should be understood that the preset duration is duration needed for reducing the voltage at the first end and the third end of the switching component S1 to the second preset value when the switching transistor is in the open-loop waveform generation mode. It should be understood that for descriptions of the second preset value, refer to the foregoing descriptions. Details are not described herein again.

Specifically, the controller starts timing when the switching transistor Q1 is in the open-loop waveform generation mode. For example, as shown in FIG. 8, a moment at which the switching transistor Q1 starts to be in the open-loop waveform generation mode is the moment t0. In this case, the controller starts timing. When the duration for which the switching transistor Q1 is in the open-loop waveform generation mode is longer than or equal to the preset duration, the first end and the third end of the switching component S1 are controlled to be connected.

As shown in FIG. 8, for example, the second preset value is the voltage value V2. It can be seen from the figure that a critical moment corresponding to the voltage value V2 is a moment t1, that is, a corresponding moment at which the voltage at the first end and the second end of the switching component S1 is reduced to V2 is the moment t1. In this case, it is assumed that the preset duration is a time period (t1-t0).

For example, in a possible implementation, the controller starts timing when the switching transistor Q1 starts to be in the open-loop waveform generation mode. Then, when the duration for which the switching transistor Q1 is in the open-loop waveform generation mode is equal to the preset duration, the controller controls the first end to be connected to the third end of the switching component S1. For example, when timing reaches the preset duration (for example, the time period (t1-t0)), the controller may control the first end to be connected to the third end of the switching component S1.

For example, in a possible implementation, the controller starts timing when the switching transistor Q1 starts to be in the open-loop waveform generation mode. Then, when the duration for which the switching transistor Q1 is in the open-loop waveform generation mode is longer than the preset duration, the controller controls the first end to be connected to the third end of the switching component S1. In other words, the controller may control, at any moment after timing reaches the preset duration (for example, the time period (t1-t0)), the first end to be connected to the third end of the switching component S1. For example, as shown in FIG. 8, the controller may control, at a moment t2, the first end to be connected to the third end of the switching component S1. A time period (t2-t0) is longer than the time period (t1-t0).

It should be noted that the open-loop waveform generation mode described above is merely an example for description. This application is also applicable to another waveform generation mode, for example, provided that the voltage at the two ends of the switching component can be reduced to a specific threshold (for example, the second preset value) when the switching transistor Q1 is in the waveform generation mode.

According to the foregoing technical solution, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the first end and the third end of the switching component S1 can be safely connected before the photovoltaic energy storage system is powered off and shut down. In this way, contact damage, increased contact resistance, and failure of the switching component S1 are avoided, and reliability of an entire device is improved.

FIG. 9 is a schematic flowchart of a control method 900 according to an embodiment of this application. As shown in FIG. 9, the control method 900 specifically includes step S910 and step S920. The following describes step S910 and step S920 in detail. It should be noted that the control method may be applied to the foregoing photovoltaic energy storage system, or may be applied to another photovoltaic power generation scenario. It should be understood that this is not limited in this embodiment of this application.

It should be noted in advance that the following related steps in this embodiment of this application may be performed by the photovoltaic energy storage system, or corresponding steps may be specifically performed by a controller.

S910: Obtain an output voltage and/or an output current of a photovoltaic module.

S920: When the output voltage and/or the output current of the photovoltaic module are/is less than or equal to thresholds/a threshold, control a first end to be connected to a second end of a switching component, and control the first end to be disconnected from a third end of the switching component.

It should be noted that, that the output voltage and/or the output current of the photovoltaic module are/is less than or equal to the thresholds/threshold may be understood as that at night, the photovoltaic module does not convert light energy into a direct current, and therefore the current or the voltage output by the photovoltaic module is less than or equal to the threshold. For the photovoltaic energy storage system, at night, an energy storage apparatus provides energy for an inverter. When a controller controls the first end to be connected to the second end of the photovoltaic module, and controls the first end to be disconnected from the third end, a voltage output by the energy storage apparatus can be input to a negative electrode of the photovoltaic module, so that a voltage of the negative electrode of the photovoltaic module relative to the ground is boosted to a zero voltage or a positive voltage, to perform PID compensation on the photovoltaic module at night.

For example, in a possible implementation, when the output voltage of the photovoltaic module is less than or equal to the threshold, the controller controls the first end to be connected to the second end of the switching component, and controls the first end to be disconnected from the third end of the switching component. It should be understood that the threshold in this case is a voltage threshold.

For example, in a possible implementation, when the output current of the photovoltaic module is less than or equal to the threshold, the controller controls the first end to be connected to the second end of the switching component, and controls the first end to be disconnected from the third end of the switching component. It should be understood that the threshold in this case is a current threshold.

For example, in a possible implementation, when both the output voltage and the output current of the photovoltaic module are less than or equal to the thresholds, the controller controls the first end to be connected to the second end of the switching component, and controls the first end to be disconnected from the third end of the switching component. It should be understood that the thresholds in this case are a current threshold and a voltage threshold respectively. In other words, that both the output voltage and the output current are less than or equal to the thresholds may be understood as that the output voltage is less than or equal to the voltage threshold, and the output current is also less than or equal to the current threshold.

Optionally, in a possible implementation, the method may further include: when the output voltage and/or the output current of the photovoltaic module are/is greater than the thresholds/threshold, the controller controls the first end to be disconnected from the second end of the switching component, and controls the first end to be connected to the third end of the switching component.

That the output voltage and/or the output current of the photovoltaic module are/is greater than the thresholds/threshold may be understood as that in the daytime, the photovoltaic module converts light energy into a direct current for output, and in this case, the current or the voltage output by the photovoltaic module is greater than the threshold. The controller controls the first end to be disconnected from the second end of the switching component, and controls the first end to be connected to the third end of the switching component, so that the photovoltaic module can normally output the direct current in the daytime, to supply power to an inverter circuit and the energy storage apparatus.

For example, in a possible implementation, when the output voltage of the photovoltaic module is greater than the threshold, the controller controls the first end to be disconnected from the second end of the switching component, and controls the first end to be connected to the third end of the switching component. It should be understood that the threshold in this case is the voltage threshold.

For example, in a possible implementation, when the output current of the photovoltaic module is greater than the threshold, the controller controls the first end to be disconnected from the second end of the switching component, and controls the first end to be connected to the third end of the switching component. It should be understood that the threshold in this case is the current threshold.

In a possible implementation, when both the output voltage and the output current of the photovoltaic module are greater than the thresholds, the controller controls the first end to be disconnected from the second end of the switching component, and controls the first end to be connected to the third end of the switching component. It should be understood that the thresholds in this case are the current threshold and the voltage threshold respectively. In other words, that both the output voltage and the output current are greater than the thresholds may be understood as that the output voltage is greater than the voltage threshold, and the output current is also greater than the current threshold.

In conclusion, according to the foregoing technical solution, when the output voltage and/or the output current of the photovoltaic module are/is less than or equal to the thresholds/threshold, the controller controls the first end to be connected to the second end of the switching component, and controls the first end to be disconnected from the third end of the switching component. The second end of the switching component is connected to a positive electrode of a direct current bus, and the controller controls the first end to be connected to the second end of the switching component. Therefore, the voltage output by the energy storage apparatus can be input to the negative electrode of the photovoltaic module, so that the voltage value of the negative electrode (PV-) of the photovoltaic module relative to the ground is boosted to the zero voltage or the positive voltage, and the photovoltaic energy storage system performs PID compensation on the photovoltaic module at night. In addition, in this embodiment of this application, an additional voltage compensation module does not need to be disposed in the photovoltaic energy storage system, so that complexity of the photovoltaic energy storage system and a quantity of devices can be reduced, and costs can be further lowered.

However, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the photovoltaic energy storage system is de-energized. To ensure that the photovoltaic energy storage system can work normally when the photovoltaic module has an output voltage or an output current in the daytime, the first end and the third end of the switching component need to be controlled to be connected before the energy storage apparatus is powered off and shut down.

However, because the inverter in the photovoltaic energy storage system continuously works in a grid-connected mode at night, the second end of the switching component is connected to the positive electrode of the direct current bus, and the voltage of the negative electrode (PV-) of the photovoltaic module relative to the ground (PE) can be boosted to the zero voltage or the positive voltage. As a result, a large voltage difference exists between the first end and the third end of the switching component. In this case, if the controller controls the first end to be connected to the third end, contact damage and increased contact resistance of the switching component may be caused, affecting reliability of an entire device, and even leading to failure of the switching component in severe cases.

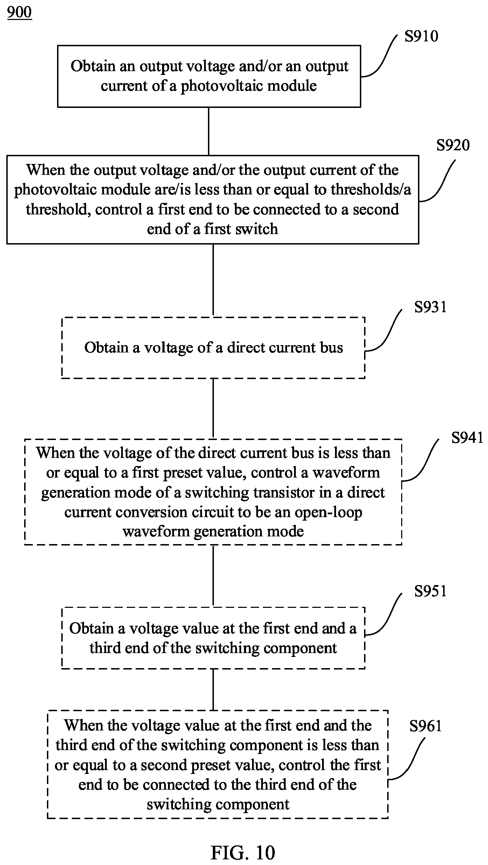

Based on this, another embodiment of this application provides a control method, to avoid the foregoing problem on the switching component. FIG. 10 is a schematic flowchart of a control method 900 according to another embodiment of this application. The method may further include the following steps.

Step S931: Obtain a voltage of a direct current bus.

Step S941: When the voltage of the direct current bus is less than or equal to a first preset value, control a waveform generation mode of a switching transistor in a direct current conversion circuit to be an open-loop waveform generation mode, where the first preset value is a preset voltage value.

It should be understood that the voltage of the direct current bus may be considered as an input bus voltage of an inverter circuit in an inverter, or an input bus voltage of an auxiliary power supply in the inverter. That the voltage of the direct current bus is less than or equal to the first preset value may be understood as that an energy storage apparatus in a photovoltaic energy storage system is shut down at a lower limit. In this case, the energy storage apparatus does not provide energy for the inverter.

It should be noted that when the controller controls the switching transistor Q1 in the direct current conversion circuit to be in the open-loop waveform generation mode, a voltage at a first end and a third end of a switching component is reduced.

It should be understood that for related descriptions of continuous reduction of the voltage at the first end and the third end of the switching component when the switching transistor Q1 is in the open-loop waveform generation mode, refer to the foregoing related descriptions in FIG. 7A and FIG. 7B and FIG. 8. For brevity, details are not described herein again.

Step S951: Obtain a voltage value at the first end and the third end of the switching component.

Step S961: When the voltage value at the first end and the third end of the switching component is less than or equal to a second preset value, control the first end to be connected to the third end of the switching component.

The second preset value being a safe-disconnection voltage value at the first end and the third end of the switching component may be understood as a critical voltage value at which the first end and the third end of the switching component can be safely connected. In other words, when the voltage at the first end and the third end of the switching component is less than or equal to the second preset value, problems such as contact damage, increased contact resistance, and failure of the switching component do not occur when the first end is connected to the third end of the switching component.

It should be noted that the second preset value is a preset threshold.

For example, as shown in FIG. 8, an example in which the second preset value is a voltage value V2 is used for description.

Optionally, in a possible implementation, when the voltage value at the first end and the third end of the switching component is less than or equal to the voltage value V2, the controller controls the first end to be connected to the third end of the switching component.

On the contrary, when the voltage value at the first end and the third end of the switching component are greater than the voltage value V2, the controller controls the first end and the third end of the switching component to remain disconnected until an obtained voltage value at the first end and the third end of the switching component is less than or equal to the voltage value V2, and then the controller controls the first end to be connected to the third end of the switching component.

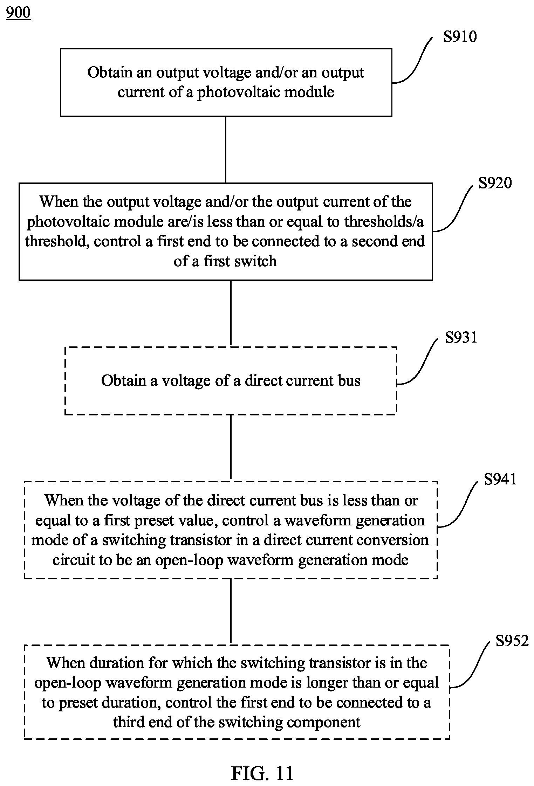

Optionally, in a possible implementation, FIG. 11 is a schematic flowchart of a control method 900 according to another embodiment of this application. As shown in FIG. 11, step S951 and step S961 may be replaced with step S952. In other words, S952 is performed after step S941 is performed.

Step S952: When duration for which the switching transistor is in the open-loop waveform generation mode is longer than or equal to preset duration, the controller controls the first end to be connected to a third end of the switching component.

It should be understood that the preset duration is duration set in advance. It should be noted that the preset duration is duration needed for reducing the voltage at the first end and the third end of the switching component to the second preset value when the switching transistor is in the open-loop waveform generation mode. It should be understood that for descriptions of the second preset value, refer to the foregoing descriptions. Details are not described herein again.

Specifically, the controller starts timing when the switching transistor Q1 is in the open-loop waveform generation mode. For example, as shown in FIG. 8, a moment at which the switching transistor Q1 starts to be in the open-loop waveform generation mode is the moment t0. In this case, the controller starts timing. When it is determined that the duration for which the switching transistor Q1 is in the open-loop waveform generation mode is longer than or equal to the preset duration, the first end and the third end of the switching component are controlled to be connected.

As shown in FIG. 8, for example, the second preset value is the voltage value V2. It can be seen from the figure that a critical moment corresponding to the voltage value V2 is a moment t1, that is, a corresponding moment at which the voltage at the first end and the second end of the switching component is reduced to V2 is the moment t1. In this case, it is assumed that the preset duration is a time period (t1-t0).

For example, in a possible implementation, the controller starts timing when the switching transistor Q1 starts to be in the open-loop waveform generation mode. Then, when the duration for which the switching transistor Q1 is in the open-loop waveform generation mode is equal to the preset duration, the controller controls the first end to be connected to the third end of the switching component. For example, when timing reaches the preset duration (for example, the time period (t1-t0)), the controller may control the first end to be connected to the third end of the switching component.

For example, in a possible implementation, the controller starts timing when the switching transistor Q1 starts to be in the open-loop waveform generation mode. Then, when the duration for which the switching transistor Q1 is in the open-loop waveform generation mode is longer than the preset duration, the controller controls the first end to be connected to the third end of the switching component. In other words, the controller may control, at any moment after timing reaches the preset duration (for example, the time period (t1-t0)), the first end to be connected to the third end of the switching component. For example, as shown in FIG. 7A and FIG. 7B, the controller may control, at a moment t2, the first end to be connected to the third end of the switching component. A time period (t2-t0) is longer than the time period (t1-t0).

According to the foregoing technical solution, when the energy storage apparatus in the photovoltaic energy storage system is powered off and shut down (for example, a battery SOC in the energy storage apparatus reaches a lower limit for shutdown, the energy storage apparatus is faulty, a battery level reaches a lower limit, or an energy storage switch is manually turned off), the first end and the third end of the switching component can be safely connected before the photovoltaic energy storage system is powered off and shut down. In this way, contact damage, increased contact resistance, and failure of the switching component are avoided, and reliability of an entire device is improved.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic energy storage system, comprising: an inverter and an energy storage apparatus, wherein the inverter comprises a direct current conversion circuit, a direct current bus, an inverter circuit, and a switching component;
a positive input end of the direct current conversion circuit is configured to connect to a positive electrode of a photovoltaic module, and a negative input end of the direct current conversion circuit is configured to connect to a negative electrode of the photovoltaic module;
a positive output end of the direct current conversion circuit is connected to a positive electrode of the direct current bus, a negative output end of the direct current conversion circuit is connected to a negative electrode of the direct current bus, the positive electrode of the direct current bus is connected to a positive input end of the inverter circuit and a positive electrode of the energy storage apparatus, and the negative electrode of the direct current bus is connected to a negative input end of the inverter circuit and a negative electrode of the energy storage apparatus; and
the switching component comprises a first end, a second end, and a third end, the first end and the third end are configured to connect between the negative electrode of the photovoltaic module and the negative electrode of the direct current bus respectively, the first end and the third end are configured to control connection/disconnection between the negative electrode of the photovoltaic module and the negative electrode of the direct current bus, the second end is connected to the positive electrode of the direct current bus, and the switching component is configured to control disconnection between the negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus.

2. The photovoltaic energy storage system according to claim 1, wherein that the first end and the third end are configured to connect between the negative electrode of the photovoltaic module and the negative electrode of the direct current bus respectively comprises:
the first end is configured to connect to the negative electrode of the photovoltaic module, and the third end is connected to the negative input end of the direct current conversion circuit; or
the first end is connected to the negative input end of the direct current conversion circuit, and the third end is connected to the negative output end of the direct current conversion circuit; or
the first end is connected to the negative output end of the direct current conversion circuit, and the third end is connected to the negative electrode of the direct current bus.

3. The photovoltaic energy storage system according to claim 1 or 2, wherein the photovoltaic energy storage system further comprises a controller, and the controller is configured to:
when an output voltage and/or an output current of the photovoltaic module are/is less than or equal to thresholds/a threshold, control the first end to be connected to the second end, and control the first end to be disconnected from the third end, wherein a positive voltage output by the energy storage apparatus is used to boost a voltage of the negative electrode of the photovoltaic module relative to the ground to a zero voltage or a positive voltage.

4. The photovoltaic energy storage system according to claim 3, wherein the controller is further configured to:
when the output voltage and/or the output current of the photovoltaic module are/is greater than the threshold, control the first end to be disconnected from the second end, and control the first end to be connected to the third end, wherein a direct current output by the photovoltaic module is used to supply power to the inverter circuit and the energy storage apparatus.

5. The photovoltaic energy storage system according to any one of claims 1 to 4, wherein the photovoltaic energy storage system further comprises a current-limiting device, wherein
one end of the current-limiting device is connected to the positive electrode of the direct current bus, and the other end of the current-limiting device is connected to the second end.

6. The photovoltaic energy storage system according to any one of claims 1 to 5, wherein the controller is further configured to:
when a voltage of the direct current bus is less than or equal to a first preset value, control a waveform generation mode of a switching transistor in the direct current conversion circuit to be an open-loop waveform generation mode, wherein
when the switching transistor is in the open-loop waveform generation mode, a voltage at the first end and the third end is reduced.

7. The photovoltaic energy storage system according to claim 6, wherein the controller is further configured to:
when a voltage value at the first end and the third end is less than or equal to a second preset value, control the first end to be disconnected from the second end, and control the first end to be connected to the third end, wherein the second preset value is a safe-disconnection voltage value at the first end and the second end.

8. The photovoltaic energy storage system according to claim 6, wherein the controller is further configured to:
when duration for which the switching transistor is in the open-loop waveform generation mode is longer than or equal to preset duration, control the first end to be disconnected from the second end, and control the first end to be connected to the third end.

9. The photovoltaic energy storage system according to any one of claims 5 to 8, wherein the current-limiting device comprises at least one of the following:
a resistor, an inductor, and a capacitor.

10. The photovoltaic energy storage system according to any one of claims 1 to 9, wherein the photovoltaic energy storage system further comprises a first diode, and
the first diode is connected in parallel to the first end and the third end, wherein a direction of a forward current of the first diode is opposite to a direction of a current flowing through the first end and the third end when the first end is connected to the third end.

11. An inverter, comprising a direct current conversion circuit, a direct current bus, an inverter circuit, and a switching component;
a positive input end of the direct current conversion circuit is configured to connect to a positive electrode of a photovoltaic module, and a negative input end of the direct current conversion circuit is configured to connect to a negative electrode of the photovoltaic module; and
a positive output end of the direct current conversion circuit is connected to a positive electrode of the direct current bus, a negative output end of the direct current conversion circuit is connected to a negative electrode of the direct current bus, the positive electrode of the direct current bus is connected to a positive input end of the inverter circuit, the negative electrode of the direct current bus is connected to a negative input end of the inverter circuit, the positive electrode of the direct current bus is configured to connect to a positive electrode of an energy storage apparatus, and the negative electrode of the direct current bus is configured to connect to a negative electrode of the energy storage apparatus, wherein
the switching component comprises a first end, a second end, and a third end, the first end and the third end are configured to connect between the negative electrode of the photovoltaic module and the negative electrode of the direct current bus respectively, the first end and the third end are configured to control connection/disconnection between the negative electrode of the photovoltaic module and the negative electrode of the direct current bus, the second end is connected to the positive electrode of the direct current bus, and the switching component is configured to control disconnection between the negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus.

12. The inverter according to claim 11, wherein that the first end and the third end are configured to connect between the negative electrode of the photovoltaic module and the negative electrode of the direct current bus respectively comprises:
the first end is configured to connect to the negative electrode of the photovoltaic module, and the third end is connected to the negative input end of the direct current conversion circuit; or
the first end is connected to the negative input end of the direct current conversion circuit, and the third end is connected to the negative output end of the direct current conversion circuit; or
the first end is connected to the negative output end of the direct current conversion circuit, and the third end is connected to the negative electrode of the direct current bus.

13. The inverter according to claim 11 or 12, wherein the inverter further comprises a controller, and the controller is configured to:
when an output voltage and/or an output current of the photovoltaic module are/is less than or equal to thresholds/a threshold, control the first end to be connected to the second end, and control the first end to be disconnected from the third end, wherein a positive voltage output by the energy storage apparatus is used to boost a voltage of the negative electrode of the photovoltaic module relative to the ground to a zero voltage or a positive voltage.

14. The inverter according to claim 13, wherein the controller is further configured to:
when the output voltage and/or the output current of the photovoltaic module are/is greater than the threshold, control the first end to be disconnected from the second end, and control the first end to be connected to the third end, wherein a direct current output by the photovoltaic module is used to supply power to the inverter circuit and the energy storage apparatus.

15. The inverter according to any one of claims 11 to 14, wherein the inverter further comprises a current-limiting device, wherein
one end of the current-limiting device is connected to the positive electrode of the direct current bus, and the other end of the current-limiting device is connected to the second end.

16. The inverter according to any one of claims 11 to 15, wherein the inverter further comprises a first diode, and
the first diode is connected in parallel to the first end and the third end, wherein a direction of a forward current of the first diode is opposite to a direction of a current flowing through the first end and the third end when the first end is connected to the third end.

17. A control method, wherein the method comprises:
obtaining an output voltage and/or an output current of a photovoltaic module; and
when the output voltage and/or the output current of the photovoltaic module are/is less than or equal to thresholds/a threshold, controlling a first end to be connected to a second end of a switching component, and controlling the first end to be disconnected from the third end, so that a positive voltage output by an energy storage apparatus is used to boost a voltage of a negative electrode of the photovoltaic module relative to the ground to a zero voltage or a positive voltage; or
when the output voltage and/or the output current of the photovoltaic module are/is less than or equal to the thresholds/threshold, controlling the first end to be disconnected from the second end, and controlling the first end to be connected to the third end of the switching component, so that a direct current output by the photovoltaic module is used to supply power to an inverter circuit and the energy storage apparatus, wherein
a positive electrode of the energy storage apparatus and a positive input end of the inverter circuit are connected to a positive electrode of a direct current bus, and a negative electrode of the energy storage apparatus and a negative input end of the inverter circuit are connected to a negative electrode of the direct current bus;
the first end and the third end are configured to connect between the negative electrode of the photovoltaic module and the negative electrode of the direct current bus respectively, the first end and the third end are configured to control connection/disconnection between the negative electrode of the photovoltaic module and the negative electrode of the direct current bus, the second end is connected to the positive electrode of the direct current bus, and the switching component is configured to control disconnection between a negative input end of the direct current conversion circuit and the positive electrode of the direct current bus and connection between the negative input end of the direct current conversion circuit and the negative electrode of the direct current bus, or the switching component is configured to control connection between the negative input end of the direct current conversion circuit and the positive electrode of the direct current bus and disconnection between the negative input end of the direct current conversion circuit and the negative electrode of the direct current bus; and
a positive output end of the direct current conversion circuit is connected to the positive electrode of the direct current bus, and a negative output end of the direct current conversion circuit is connected to the negative electrode of the direct current bus.

18. The control method according to claim 17, wherein the method further comprises:
obtaining a voltage of the direct current bus; and
when the voltage of the direct current bus is less than a first preset value, controlling a waveform generation mode of a switching transistor in the direct current conversion circuit to be an open-loop waveform generation mode, wherein
when the switching transistor is in the open-loop waveform generation mode, a voltage at the first end and the third end is reduced.

19. The control method according to claim 18, wherein the method further comprises:
obtaining a voltage value at the first end and the third end; and
when the voltage value at the first end and the third end is less than or equal to a second preset value, controlling the first end to be connected to the third end, and controlling the first end to be disconnected from the second end of the switching component, wherein
the second preset value is a safe-disconnection voltage value at the first end and the second end.

20. The control method according to claim 18, wherein the method further comprises:
when duration for which the switching transistor is in the open-loop waveform generation mode is longer than or equal to preset duration, controlling the first end to be connected to the third end, and controlling the first end to be disconnected from the second end.
